(19) Europäisches Patentamt
European Patent Office
Office européen des brevets

(11) Veröffentlichungsnummer: **0 202 662**
**A1**

(12) # EUROPÄISCHE PATENTANMELDUNG

(21) Anmeldenummer: **86106867.4**

(22) Anmeldetag: **21.05.86**

(51) Int. Cl.$^4$: **F 25 B 17/08**
F 25 B 29/00, F 24 J 3/00

(30) Priorität: **24.05.85 DE 3518738**

(43) Veröffentlichungstag der Anmeldung:
**26.11.86 Patentblatt 86/48**

(84) Benannte Vertragsstaaten:
**AT CH DE FR GB IT LI NL SE**

(71) Anmelder: **Ruhrgas Aktiengesellschaft**
**Huttropstrasse 60 Postfach 10 32 52**
**D-4300 Essen 1(DE)**

(72) Erfinder: **Schmidt, Helmut, Dr. Dipl.-Chem.**
**Riemenschneiderstrasse 15**
**D-8706 Höchberg(DE)**

(72) Erfinder: **Strutz, Jürgen, Dr. Dipl.-Chem.**
**Dohlenweg 2**
**D-8759 Feldkahl(DE)**

(72) Erfinder: **Gerritsen, Heinz Günter, Dr.-Ing.**
**Debbingstrasse 14**
**D-4270 Dorsten 19(DE)**

(72) Erfinder: **Mühlmann, Heinrich, Dr. rer. nat. Dipl.-Chem.**
**Bonifatiusstrasse 44a**
**D-4270 Dorsten 21(DE)**

(74) Vertreter: **Zenz, Joachim Klaus et al,**
**Am Ruhrstein 1**
**D-4300 Essen 1(DE)**

(54) **Verfahren und Vorrichtung zur Gewinnung von Nutzwärme.**

(57) Aus Umweltenergie niedriger Temperatur wird nach dem Arbeitsprinzip der Wärmepumpe eine relativ hohe Nutzenergie dadurch gewonnen, daß in einem druckdicht abgeschlossenen System aus einem festen ersten Gasadsorbens (3) durch Zufuhr von Fremdenergie ein gasförmiges Sorptionsmedium desorbiert und einem zweiten festen Gasadsorbens (4) zugeführt und von diesem solange unter Wärmeabfuhr an ein Nutzwärmesystem (10,11,12) adsorbiert wird, bis ein quasi-stationärer Gleichgewichtszustand erreicht wird. Der infolge der Zufuhr von Fremdenergie im ersten Adsorbens (3) gespeicherte Wärmeinhalt wird dann auf das Nutzwärmesystem (10, 11, 12) ubertragen und das erste Gasadsorbens (3) auf diese Weise abgekühlt und ein Adsorptionsbestreben für das Sorptionsmedium dadurch soweit erhöht, daß das im zweiten Gasadsorbens (4) adsorbierte gasförmige Sorptionsmedium unter Aufnahme von Wärmeenergie aus der auf niedrigerem Temperaturniveau befindlichen Wärmeenergiequelle (15) wieder desorbiert, zum ersten Gasadsorbens (3) geführt und dort adsorbiert wird. Dieser Zyklus wird danach laufend wiederholt.

EP 0 202 662 A1

./...

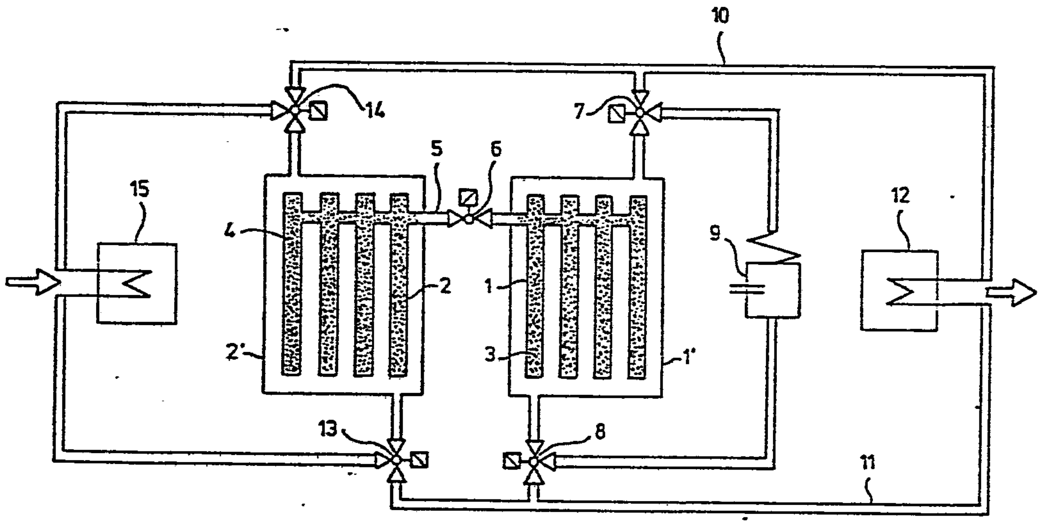


Fig. 1

Die Erfindung betrifft ein Verfahren zur Gewinnung von Nutzwärme, z.B. für die Heizung von Gebäuden, Brauchwassererwärmung o.dgl. nach dem Arbeitsprinzip der Wärmepumpe aus einer äußeren, auf einem niedrigeren Temperaturniveau befindlichen Wärmequelle, z.B. Umweltwärme, Abwärme von Fabrikationsprozessen o.dgl. bei dem in einem druckdicht abgeschlossenen System mit einem festen ersten Gasadsorbens und einem zweiten festen Gasadsorbens durch Zufuhr von Fremdenergie ein gasförmiges Sorptionsmedium (Adsorbat) aus dem ersten Gasadsorbens desorbiert und an dem zweiten Gasadsorbens solange unter Wärmeabfuhr an ein Nutzwärmesystem adsorbiert wird, bis ein quasi--stationärer Gleichgewichtszustand erreicht ist, wobei der Druck des Sorptionsmediums im Bereich des ersten Gasadsorbens gesenkt und das Adsorptionsbestreben dieses ersten Gasadsorbens für das Soprtionsmedium dadurch soweit erhöht wird, daß das in dem zweiten Gasadsorbens adsorbierte gasförmige Sorptionsmedium unter Aufnahme von Wärmeenergie aus der auf niedrigerem Temperaturniveau befindlichen Wärmeenergiequelle dann wieder desorbiert, dem ersten Gasadsorbens zugeführt und dort adsorbiert wird, und bei dem der vorstehende Zyklus dann ständig wiederholt wird, sowie Wärmepumpen zur Durchführung des Verfahrens.

Bei den bekannten, nach dem Kompressions- oder Absorptionsprinzip arbeitenden Wärmepumpensystemen werden Betriebsmittel (Kältemittel) z.B. Frigene (fluorhaltige Metanderivate) oder auch Ammoniak verwendet, deren Verdampfungstemperatur bei bzw. unter der Temperatur der äußeren Wärmeenergiequelle liegt. Das Betriebsmittel wird in einem geschlossenen, z.B. aus einem hintereinandergeschalteten Verdampfer, Verdichter, Kondensator und Drosselventil bestehenden Kreislauf kontinuierlich umgewälzt, in welchem es teils flüssig und teils gasförmig ist. Die Wärme der auf niedrigem Temperaturniveau befindlichen äußeren Wärmeenergiequelle wird dabei zur Verdampfung des bis dahin flüssigen Betriebsmittels im Verdampfer aufgenommen und

fällt am Kondensator als Nutzwärme an. Diese Systeme haben sich an sich bewährt, und werden in großem Umfange eingesetzt. Allerdings ist der Nutzwärmegewinn insbesondere dann, wenn die Temperatur der äußeren Wärmeenergiequelle relativ niedrig ist, vergleichsweise gering. Von den verwendeten Betriebsmitteln hat Ammoniak neben seinem unangenehmen Geruch den Nachteil der Giftigkeit, Brennbarkeit und Explosionsgefährlichkeit. Dagegen gelten Frigene als ungiftig und sind geruchlos, nicht brennbar und nicht explosibel, wobei jedoch ihre chemischen Eigenschaften - z.B. gegenüber Schmierölen - kritisch und ihre Umweltverträglichkeit in höheren Konzentrationen zumindest nicht eindeutig geklärt ist.

Aus der US-PS 4 183 734 ist ein Wärmepumpenprozeß der eingangs genannten Art bekannt, bei dem an zwei Adsorptionsmittelschichten eine sogenannte pressure-swing-adsorption durchgeführt wird. Hierzu sind die beiden Adsorber an ihren unteren und oberen Enden durch Rohrleitungen verbunden, die die Zirkulation eines Gasgemischs ermöglichen, welches eine reversibel ad- und desorbierbare Gaskomponente enthält. Zu diesem Zweck ist in der einen Gasverbindungsleitung ein in beide Richtungen betreibbarer Kompressor und in die andere Gasverbindungsleitung ein Druckminderventil eingebaut. Dieses bekannte Verfahren hat den Nachteil, daß die als Spülgas verwendete nicht adsorbierbare Gaskomponente des zirkulierenden Gasgemisches ständig im Kreislauf durch das System geleitet werden muß, ohne daß die dazu vom Kompressor aufzubringende Energie zurückgewinnbar ist. Anderenfalls, wenn nämlich statt eines Gasgemisches nur eine einzelne adsorbierbare Gaskomponente in diesem bekannten Prozeß verwendet wird, müssen sehr hohe Druckdifferenzen realisiert werden; auch die hierzu erforderliche Energie ist nicht zurückgewinnbar.

Demgegenüber liegt der Erfindung die Aufgabe zugrunde, ein

Verfahren zur Gewinnung von Nutzenergie aus auf einem niedrigen Temperaturniveau zur Vefügung stehender Wärmenergie, z.B. Umweltwärme, sowie eine Wärmepumpe zur Durchführung des Verfahrens anzugeben, welche eine vergleichsweise hohe Nutzenergiegewinnung gestattet, wobei die Verwendung von gasförmigen Betriebsmitteln möglich sein soll, welche die erwähnten Schadwirkungen der Betriebsmittel der bekannten Verfahren nicht aufweisen.

Ausgehend von einem Verfahren der eingangs erwähnten Art wird diese Aufgabe erfindungsgemäß dadurch gelöst, daß die Fremdenergie dem ersten Gasadsorbens in Form von gesondert erzeugter Fremdwärme relativ hohen Temperaturniveaus zugeführt, der infolge der Zufuhr von Fremdenergie im ersten Gasadsorbens gespeicherte Wärmeinhalt nach Erreichen des quasi-stationären Gleichgewichtszustandes auf das Wärmenutzsystem übertragen und das erste Gasadsorbens auf diese Weise unter Erhöhung seines Adsorptionsbestrebens für das Sorptionsmedium abgekühlt und das aus dem ersten Gasadsorbens desorbierte Sorptionsmedium dem in seinen De- und Adsorptionseigenschaften unterschiedlichen zweiten Gasadsorbens zugeführt wird. Alternativ wird diese Aufgabe erfindungsgemäß dadurch gelöst, daß als feste Gasadsorbentien Kieselsäureheteropolykondensate verwendet werden, die dadurch hergestellt sind, daß man

a) mindestens ein hydrolysierbares Kieselsäurederivat der allgemeinen Formel I

$$SiR_4 \qquad (I)$$

in der R Wasserstoff, Halogen, Alkoxy oder $-NR'_2$ ($R'$ = Wasserstoff und/oder nieder-Alkyl) bedeutet, jedoch nicht alle Reste R Wasserstoff sind, und

b) mindestens ein substituiertes Silan der allgemeinen Formel II

$$SiR_nR'_{(4-n)} \qquad (II)$$

in der R die vorstehende Bedeutung hat, R' Alkyl, Alkenyl, Aryl oder Aralkyl darstellt und n eine ganze Zahl von 1 bis 3 ist, sowie

c) mindestens ein funktionelles Silan der allgemeinen Formel III

$$SiR_n(R''Y)_{(4-n)} \qquad (III)$$

in der R die vorstehende Bedeutung hat, R" Alkylen, Phenylen, Alkylphenylen oder Alkylenphenylen darstellt, Y Halogen oder eine gegebenenfalls substituierte Amino-, gegebenenfalls substituierte Anilino-, Aldehyd-, Keto-, Carboxy-, Hydroxy-, Mercapto-, Cyano-, Hydroxyphenyl-, Diazo-, Carbonsäurealkylester-, Sulfonsäure -($-SO_3H$) oder Phosphorsäuregruppe ($-PO_3H_2$) bedeutet und n eine ganze Zahl von 1 bis 3 ist,

in Gegenwart mindestens der zur Hydrolyse stöchiometrisch erforderlichen Wassermenge sowie gegebenenfalls in Gegenwart eines Kondensationskatalysators und/oder eines Lösungsmittels kondensiert, wobei die Menge der Komponenten a) bis c) so gewählt wird, daß das entstehende Kieselsäureheteropolykondensat, bezogen auf Oxide, 35 bis 90 Gew.-% der Komponente (a), 10 bis 50 Gew.-% der Komponente (b), 0 bis 15 Gew.-% der Komponente (c) enthält. Kieselsäureheteropolykondensate sind zwar als Adsorbentien aus der DE-OS 27 58 415 an sich bekannt, doch werden sie nach dieser Druckschrift ausschließlich für Stofftrennprozesse, und zwar an flüssigen, insbesondere wässrigen

Stoffgemischen verwendet.

Bei der Adsorption erfolgt die Bindung der Moleküle des gasförmigen Sorptionsmediums oder Adsorbats an die Oberfläche des Feststoff-Adsorbens durch molekulare Kräfte, wobei Kondensations- und Bindungswärme frei wird. Die Menge des an einem bestimmten Adsorbens mit vorgegebener Oberflächengröße und Stoffstruktur adsorbierbaren gasförmigen Sorptionsmediums ist vom Umgebungsdruck und der Temperatur abhängig. Die Desorption, d.h. das Austreiben von an ein Adsorbens gebundenem gasförmigen Sorptionsmedium erfordert umgekehrt die Zufuhr von Energie, z.B. Wärmeenergie, oder auch die Absenkung des Umgebungsdrucks. In sogenannten Sorptionsisothermen läßt sich die Abhängigkeit der Menge einer bei einer bestimmten Temperatur an einem bestimmten Adsorbens bei unterschiedlichen Drücken gebundenen Adsorbats darstelen, wobei neben der absoluten Größe der Oberfläche auch die Struktur des Adsorbens, d.h. die Form, in welcher es vorliegt, z.B. als fester Körper, als Granulatschüttung, als Pulver u.dgl. und seine Porösität, d.h. die Menge und die Größe der in ihm enthaltenen Hohlräume, eine Rolle spielt.

Bei der ersten Ausführungsform des Verfahrens (Anspruch 1) wird die Fremdenergie dem ersten Gasadsorbens in Form von gesondert erzeugter Fremdwärme relativ hohen Temperaturniveaus zugeführt, und das aus dem ersten Gasadsorbens desorbierte Sorptionsmedium dem in seinen De- und Adsorptionseigenschaften unterschiedlichen zweiten Gasadsorbens zugeführt. Dabei wird dann die Tatsache ausgenutzt, daß ein gasförmiges Sorptionsmedium in einem druckdicht geschlossenen System abwechselnd bei unterschiedlichen Temperatur- und Druckbedingungen an Adsorbentien unterschiedlichen De- und Adsorptionsverhaltens gebunden bzw. ausgetrieben wird, wobei Nutzwärme aus der bei der Adsorption freigegebenen Wärme gewonnen und die zur Desorption

erforderliche Energie teils als gesondert erzeugte Fremdwärme auf hohem Temperaturniveau zugeführt, teils aus vorhandenen Wärmequellen niedrigen Temperaturniveaus, z.B. Umweltwärme oder Prozeß-Abwärme, gewonnen wird.

Die Gasadsorbentien gemäß der zweiten Ausführungsform des Verfahrens (Anspruch 2) sind für alle gattungsgemäßen Varianten des erfindungsgemäßen Wärmepumpenprozesses geeignet, insbesondere auch für das Verfahren nach Anspruch 1 oder - nativ - für das Verfahren nach Anspruch 4, wonach vorgeschlagen wird, daß die Fremdenergie dem ersten Gasadsorbens in Form von Wärme aus der auf niedrigem Temperaturniveau befindlichen Wärmequelle zuzuführen, wobei dem aus dem ersten Adsorbens desorbierten Sorptionsmedium beim Übertritt zum zweiten Gasadsorbens durch Verdichtung in einem mechanisch angetriebenen Kompressor zusätzliche Energie zugeführt wird. Gleichzeitig wird natürlich der Druck in der Umgebung des ersten Gasadsorbens abgesenkt, wodurch die Desorption bei dem geringeren Temperaturniveau erst möglich wird.

Als feste Gasadsorbentien werden in einer bevorzugten Weiterbildung des erfindungsgemäßen Verfahrens solche, insbesondere aus der Familie der Silikat-Werkstoffe, verwendet, die durch entsprechende Behandlung in ihrem Adsorptionsverhalten zum gasförmigen Sorptionsmedium durch Bildung aktiver Adsorptionszentren und/oder Gefügeparametern, wie eine hohe spezifische Oberfläche und/oder eine auf das Sorptionsmedium abgestimmte Porenradienverteilung beeinflußt sind.

Als gasförmiges Sorptionsmedium wird dabei zweckmäßig $CO_2$ verwendet, welches ungiftig und chemisch weitgehend inert ist, d.h. sich bei den im erfindungsgemäßen Verfahren auftretenden Temperaturen und Drücken nicht zersetzt und - bei Entweichen aus dem System infolge von Beschädigungen - keine Gefährdung

bedeutet. Außerdem steht es in beliebigen Mengen preisgünstig zur Verfügung.

Als Adsorbens im Bereich des niedrigen Temperaturniveaus, z.B. im Umwelttemperaturbereich, kann beispielsweise $SiO_2$ (im folgenden Adsorbens I genannt) und als Adsorbens im Bereich des hohen Temperaturniveaus eine Mischung aus 30 Gew.-% $SiO_2$ und 70 Gew.-% $(NH_2(CH_2)_3Si)_2O_3$ (im folgenden Adsorbens II genannt) verwendet werden. Diese Stoffe eignen sich besonders für das erfindungsgemäße Verfahren, da sie eine Aufnahme von Desorptionswärme auf dem niedrigen Temperaturniveau bis herab zu einer Temperatur von -10°C ermöglichen. Es ist also die Nutzwärmegewinnung mittels einer nach dem erfindungsgemäßen Verfahren mit den vorgeschlagenen Stoffen arbeitenden Adsorptionswärmepumpe denkbar, welche einen großen Teil ihrer Energie ganzjährig der Umweltwärme entnimmt. Bei einem Nutztemperaturniveau von 40°C ergibt sich, daß bei einer Umwelttemperatur von 21°C ein Stoffumsatz von 9 $cm^3$ pro Gramm Adsorbens auftritt, der nur auf 8 $cm^3$ pro Gramm bei 0°C und 7 $cm^3$ pro Gramm bei -10°C abfällt.

Um noch größere $CO_2$-Mengen adsorbieren zu können, wird in einer alternativen Weiterbildung der Erfindung vorgeschlagen, als Adsorbens im Bereich des niedrigen Temperaturniveaus $SiO_2$ und als Adsorbens im Bereich des hohen Temperaturniveaus eine Mischung aus 60 Gew.-% $SiO_2$ und 40 Gew.-% $(CH_3)_2Si_2O_3$ (im folgenden Adsorbens III genannt) zu verwenden. Mit dieser Kombination ist bereits in der Ausgangssituation bei 40°C insgesamt eine größere Menge $CO_2$ adsorbiert, so daß ein höherer Stoffumsatz möglich ist. Bei der Desorption des $CO_2$ aus dem dem Hochtemperaturbereich zugeordneten Adsorbens treten bei einer Wärmezufuhr bis zu einer Temperaturerhöhung auf 150°C dann allerdings Drücke von mehr als 15 bar auf, was bei der Bemessung der Bauteile einer Wärmepumpe, in welcher das erfindungsgemäße Verfahren durchgeführt wird, zu berücksichtigen wäre.

Um solche Drücke auf etwa 15 bar zu begrenzen, wird in weiterer Ausbildung der Erfindung als Adsorbens im Bereich des niedrigen Temperaturniveaus mit MnO imprägniertes $SiO_2$ (im folgenden Adsorbens IV genannt) und als Adsorbens im Hochtemperaturbereich eine Mischung aus 60 Gew.-% $SiO_2$ und 40 Gew.-% $(CH_3)_2Si_2O_3$ (d.h. Adsorbens III) verwendet. Da das dem hohen Temperaturniveau zugeordnete Adsorbens höhere Beladungen bei 40°C zuläßt, treten bei Desorption im Aufheizzeitraum dadurch, daß weniger $CO_2$ ausgetrieben wird, nur Drücke unter 15 bar auf. Trotzdem ist der Stoffumsatz bei einer Umgebungstemperatur von 0°C noch 16 $cm^3$ pro Gramm Adsorbens bei einem Druck von 3,1 bar in der Ausgangssituation. Ebenso ist es möglich, zwei verschiedene Gasadsorbentien nach Anspruch 2 zu verwenden, von denen eines mit MnO imprägniert ist.

Zur Durchführung des erfindungsgemäßen Verfahrens nach Anspruch 1 oder 2 kann eine Wärmepumpe verwendet werden, die sich dadurch auszeichnet, daß aus zwei durch wenigstens eine Leitung verbundenen Behältern ein druckdicht abgeschlossenes inneres Sorptionssystem gebildet ist, in welchem ein gasförmiges Sorptionsmedium oder Adsorbat eingeschlossen ist; daß die Behälter mit festen Gasadsorbentien mit unterschiedlichen De- und Adsorptionseigenschaften gefüllt sind; daß die Behälter jeweils als Teil einer Wärmetauschereinrichtung für Wärmeübertragung von zugeführter äußerer Wärmeenergie auf die Adsorbentien und Abfuhr von Wärmeenergie aus den Adsorbentien ausgebildet sind, wobei dem zweiten Behälter die äußere Wärmequelle niedrigen Temperaturniveaus und dem ersten Behälter eine Fremdwärmequelle hohen Temperaturniveaus zugeordnet ist, mittels welcher das im Behälter enthaltene Adsorbens in einen

Temperaturbereich erwärmbar ist, in welchem das Sorptionsmedium desorbiert; daß an die Wärmetauschereinrichtungen der Behälter ein von einem Nutzwärme-Trägermedium - beispielsweise Wasser - durchströmbares Leitungssystem angeschlossen ist, und daß Steuerorgane zur abwechselnden Beaufschlagung der Wärmetauschereinrichtung des zweiten Behälters mit Wärmeenergie aus der auf niedrigem Temperaturniveau befindlichen äußeren Wärmeenergiequelle bzw. dem Nutzwärme-Trägermedium und der Wärmetauschereinrichtung des ersten Behälters mit Wärmeenergie aus der Fremdwärmequelle bzw. dem Nutzwärme-Trägermedium vorgesehen sind. Bei der so ausgebildeten Wärmepumpe wird die zum Betrieb erforderliche Fremd- bzw. Antriebsenergie also in Form von gesondert erzeugter Fremdwärme zugeführt.

Alternativ kann die Wärmepumpe zur Durchführung des Verfahrens nach Anspruch 2 auch so ausgebildet sein, daß aus zwei durch wenigstens eine Leitung mit einem in dieser Leitung eingeschalteten, durch äußere Energie angetriebenen Kompressor verbundenen inneren Behälter ein druckdicht abgeschlossenes Sorptionssystem gebildet ist, in welchem ein gasförmiges Sorptionsmedium (Adsorbat) eingeschlossen ist; daß die Behälter mit festen Gasadsorbentien gefüllt sind; daß die Behälter jeweils als Teil einer Wärmetauschereinrichtung für Wärmeübertragung von zugeführter äußerer Wärmeenergie auf die Adsorbentien und Zufuhr von Wärmeenergie aus den Adsorbentien ausgebildet sind, wobei jeweils einer der Behälter über die ihm zugeordnete Wärmetauschereinrichtung an die äußere Wärmequelle und der jeweils andere Behälter über die ihm zugeordnete Wärmetauschereinrichtung an ein von einem Nutzwärme-Trägermedium durchströmtes Leitungssystem angeschlossen ist; und daß Steuerorgane zur abwechselnden Beaufschlagung der Wärmetauschereinrichtungen der Behälter mit Wärmeenergie aus der auf niedrigem Temperaturniveau befindlichen äußeren Wärmequelle bzw. dem Nutzwärme-Trägermedium vorgesehen sind. Da die äußere

Wärmeenergie hier auf niedrigerem Temperaturniveau zugeführt wird, muß zusätzliche Energie in Form von Antriebsenergie für den Kompressor zugeführt werden.

Zweckmäßig wird an einer vor und hinter dem Kompressor liegenden Stelle an der die Behälter verbindenden Leitung eine Beipaß-Leitung angeschlosen, in welche ein Ventil eingeschaltet ist, durch welches die Beipaß-Leitung wahlweise geschlossen und geöffnet werden kann.

Die Erfindung ist in der folgenden Beschreibung in Verbindung mit der Zeichnung näher erläutert, und zwar zeigt:

Fig. 1 schematisch die Schaltung einer Wärmepumpe zur Durchführung des erfindungsgemäßen Verfahrens nach Anspruch 1 oder 2; und

Fig. 2 das Schaltschema einer gegenüber der in Fig. 1 gezeigten Wärmepumpe abgewandelten Wärmepumpe zur Durchführung des Verfahrens nach Anspruch 2.

Bei der in Figur 1 veranschaulichten Schaltung einer Wärmepumpe sind mit 1 und 2 innere Behälter für beispielsweise in Form einer Pulver- oder Granulatschüttung vorliegende Adsorbentien 3 und 4 bezeichnet. Diese inneren Behälter sind beim dargstellten Ausführungsbeispiel als hohle, mit den Adsorbentien gefüllte Plattenwärmetauscher ausgebildet, die durch eine Rohrleitung 5 verbunden sind, welche durch ein Ventil 6 wahlweise geöffnet oder geschlossen werden kann. Die Plattenwärmetauscher 1 und 2 ihrerseits sind in äußeren Behältern 1' bzw. 2' eingesetzt, welche mit flüssigem gasförmigem oder dampfförmigem Wärmetauschermedium durchstrombar sind, so daß durch die Wandungen der Plattenwärmetauscher 1, 2 hindurch ein Wärmetausch zwischen den Adsorbentien 3, 4 und dem die äußeren Behälter 1' bzw. 2' jeweils gerade durchströmenden Wärmetauschermedium erfolgen kann. Über Dreiwegeventile 7 und 8 ist an den äußeren Behälter 1' eine Fremdwärmequelle 9 anschließbar, die beispielsweise Wasser oder Dampf hoher Temperatur erzeugen möge, welches bzw. welcher die Außenflächen der Wandung des Wärmetauschers 1 umströmt. Durch Umschaltung der Dreiwegeventile 7 und 8 ist der Behälter 1' andererseits über ein Rohrsystem 10, 11 auch mit einer schematisch als Wärmetauscher dargestellten Wärmeabnahmestelle 12 eines Wärmenutzsystems verbindbar. Auch der Behälter 2' ist über Dreiwegeventile 13, 14 an das Rohrsystem 10, 11 des Wärmenutzsystems anschaltbar. Durch Umschalten der Dreiwegeventile 13, 14 ist der Behälter 2' andererseits auch mit einer äußeren Wärmeenergiequelle 15 auf niedrigem Temperaturniveau verbindbar, die beispielsweise von der bei einem Produktionsprozeß anfallenden und in Kühlwasser abgeführten Abwärme gebildet sein kann und in der Zeichnung ebenfalls schematisch als Wärmetauscher dargestellt ist. In gleicher Weise kann einem natürlichen Fließgewässer Wasser in der benötigten Menge entnommen und nach Durchströmen des Behälters 2' in das Gewässer zurückgeführt werden. Der Behälter 2' kann also - unter Wegfall des zwischengeschalteten Wärmetauschers 15 - auch direkt mit dem dem Fließgewässer entnommenen Wasser durchströmt werden.

Der Wärmegewinnungsprozeß läuft wie folgt ab:

Im Bereich hohen Temperaturniveaus, der durch den Plattenwärmetauscher 1 mit dem Adsorbens 3 und der Fremdwärmequelle 9 gebildet wird, wird über einen konventionellen Wärmeerzeuger hochgrädiges Wasser oder Dampf der Temperatur $t_h$ über das Rohrsystem und die Dreiwegeventile 7, 8 in den Behälter 1' und somit zum Plattenwärmetauscher 1 geleitet. In diesem steigt nun die Temperatur ebenfalls auf $t_h$ an. Dadurch wird unter

Druckanstieg $CO_2$ aus dem Adsorbens 3 desorbiert. Das freigesetzte $CO_2$ wird von dem im Plattenwärmetauscher 2 befindlichen Adsorbens 4 unter Freisetzung von Bindungs- und Kondensationsenergie adsorbiert, welche durch entsprechende Schaltstellungen der Dreiwegeventile 13, 14 an das Rohrsystem 10, 11 des Wärmenutzsystems abführbar ist.

Nach Beendigung der Ladung des Adsorbens 4 werden die Dreiwegeventile 7 und 8 umgeschaltet und durch den Plattenwärmetauscher 1 das im Wärmenutzsystem strömende Nutzwärme-Trägermedium geführt. Dabei wird der Wärmeinhalt des Plattenwärmetauschers 1 an das Wärmenutzsystem abgegeben (Wärmerückgewinnung) und dieser auf $t_m$ (Nutztemperaturniveau) heruntergekühlt. Dabei sinkt der Druck wieder ab, da das Adsorbens 3 bei niedrigen Temperaturen stärker adsorbiert. Dadurch wird dem Adsorbens 4 $CO_2$ entzogen, wobei die benötigte Desorptionsenergie zunächst aus der Speicherkapazität des Plattenwärmetauschers 2 und des Behälters 2' einschließlich des zwischen ihnen befindlichen Wärmetauschermediums gedeckt wird. Sobald die Temperatur der Wärmeenergiequelle 15 niedrigen Temperaturniveaus unterschritten wird, wird diese Energiequelle durch entsprechende Schaltung der Dreiwegeventile 13, 14 auf den Behälter 2' geschaltet, worauf die zur Desorption erforderliche Wärmemenge dieser Wärmeenergiequelle entnommen wird. Bei einer Temperatur $t_0$ stellt sich dann ein quasi-stationäres Niveau ein. Durch Umschalten der Ventile 7, 8, 13 und 14 und Wärmezufuhr über die Fremdwärmequelle 9 wird der Be- und Entladezyklus neu gestartet. Die Prozeßschritte mit den sich ergebenden Temperaturen, Drücken und de- und adsorbierten $CO_2$-Mengen sind für zwei der erfindungsgemäß verwendbaren Adsorbentien-Kombinationen in den nachfolgenden Tabellen 1 und 2 aufgeführt. Diese Werte stammen aus einer Modellrechnung.

TABELLE 1

| Ausgangsschritte | Ad III | Ad I |
|---|---|---|
| Ausgangssituation | $p = 10,0$ bar<br>$T = 40^oC$<br>adsorbierte $CO_2$-Menge: 109 $cm^3/g$ | $p = 10,0$ bar<br>$T = 40^oC$<br>adsorbierte $CO_2$-Menge: 20 $cm^3/g$ |
| Schritt 1<br>Ad III arbeitet als<br>Austreiber | $p \gg 15$ bar<br>$T = 180^oC$<br>vorhandene $CO_2$-Menge: 109 $cm^3/g$ | $p = 10,0$ bar<br>$T = 40^oC$<br>adsorbierte $CO_2$-Menge: 20 $cm^3/g$ |
| Schritt 2<br>Gleichgewichts-<br>einstellung<br>Ad I adsorbiert bei $40^oC$ | $p \gg 15$ bar<br>$T \approx 180^oC$<br>vorhandene $CO_2$-Menge: 10 $cm^3/g$ | $p \gg 15$ bar<br>$T = 40^oC$<br>vorhandene $CO_2$-Menge: 119 $cm^3/g$ |
| Schritt 3<br>Abkühlen von AD III und<br>Ad I | $p = 0,5$ bar<br>$T = 40^oC$<br>adsorbierte $CO_2$-Menge: 10 $cm^3/g$ | $p \gg 15$ bar ($\gg$ 15 bar)<br>$T = 0^oC$ ($-10^oC$)<br>vorhandene $CO_2$-Menge: 119 $cm^3/g$ |
| Schritt 4<br>Gleichgewichts-<br>einstellung<br>Ad I desorbiert<br>Ad III adsorbiert | $p = 7,8$ bar (6,9 bar)<br>$T = 40^oC$<br>adsorbierte $CO_2$-Menge: 88 $cm^3/g$<br>(78 $cm^3/g$) | $p = 7,8$ bar (6,9 bar)<br>$T = 0^oC$ ($-10^oC$)<br>adsorbierte $CO_2$-Menge: 41 $cm^3/g$ |

TABELLE 2

| Arbeitsschritte | Ad III | Ad IV |
| --- | --- | --- |
| Ausgangssituation | p = 3,1 bar<br>T = 40 °C<br>adsorbierte $CO_2$-Menge: 37 $cm^3/g$ | p = 3,1 bar<br>T = 40 °C<br>adsorbierte $CO_2$-Menge: 15 $cm^3/g$ |
| Schritt 1<br>Ad III arbeitet als Austreiber | p >> 15 bar<br>T = 180 °C<br>vorhandene $CO_2$-Menge: 37 $cm^3/g$ | p = 3,1 bar<br>T = 40 °C<br>adsorbierte $CO_2$-Menge: 15 $cm^3/g$ |
| Schritt 2<br>Gleichgewichts-einstellung<br>Ad IV adsorbiert bei 40 °C | p = 15,0 bar<br>T = 180 °C<br>adsorbierte $CO_2$-Menge: 5 $cm^3/g$ | p = 15,0 bar<br>T = 40 °C<br>adsorbierte $CO_2$-Menge: 47 $cm^3/g$ |
| Schritt 3<br>Abkühlen von Ad III und Ad IV | p = 0,2 bar<br>T = 40 °C<br>adsorbierte $CO_2$-Menge: 5 $cm^3/g$ | p = 7,0 bar<br>T = -10 °C<br>adsorbierte $CO_2$-Menge: 47 $cm^3/g$ |
| Schritt 4<br>Gleichgewichts-einstellung<br>Ad IV desorbiert<br>Ad III adsorbiert | p = 1,5 bar<br>T = 40 °C<br>adsorbierte $CO_2$-Menge: 21 $cm^3/g$ | p = 1,5 bar<br>T = -10 °C<br>adsorbierte $CO_2$-Menge 31 $cm^3/g$ |

In Fig. 2 ist das Schaltschema eines abgewandelten Ausführungsbeispiels einer Wärmepumpe dargestellt, bei welcher an die Stelle der Zufuhr von gesondert erzeugter Fremdwärme relativ hoher Temperatur zur Desorption des Sorptionsmediums aus dem Adsorbens 3 die Zufuhr von äußerer mechanischer Energie zum Sorptionssystem in dem Sinne tritt, daß mittels eines motorisch angetriebenen Kompressors der Druck in einem der Plattenwärmetauscher abgesenkt und im anderen erhöht wird. Durch Absenkung des Drucks im Plattenwärmetauscher 1 ist es dann möglich, die Desorptionsenergie zum Austreiben des Sorptionsmediums aus dem Adsorbens 3 aus der auf niedrigem Temperaturniveau befindlichen äußeren Wärmequelle zu decken. Da die grundsätzliche Schaltung der beiden Wärmepumpen ähnlich ist und in den Zeichnungen gleiche Bezugszeichen für funktionell einander entsprechende Bauteile verwendet sind, werden nachstehend nur kurz die schaltungsmäßigen Unterschiede zu der mit Zufuhr von gesondert erzeugter Fremdwärme arbeitenden Wärmepumpe zu beschreiben, während im übrigen - zur Vermeidung unnötiger Wiederholungen - auf die vorausgehende Beschreibung verwiesen werden kann.

An die Stelle der Fremdwärmequelle 9 tritt hier also der in die Leitung 5 eingeschaltete und beispielsweise durch einen Elektromotor M angetriebene Verdichter V oder Kompressor 9', der saugseitig an den Plattenwärmetauscher 1 und druckseitig an den Plattenwärmetauscher 2 angeschlossen sein möge. Durch eine vor und hinter dem Kompressor 9' an die Leitung 5 angeschlossene, mit einem wahlweise zu öffnenden und zu schließenden Ventil 6 versehene Beipaß-Leitung 5 ist der Kompressor umgehbar, wenn nach erfolgtem Beladezyklus des Adsorbens 4 im Plattenwärmetauscher 2 und Abfuhr der hierbei entstandenen Bindungs- und Kondensationsenergie an das Nutzwärmesystem das Sorptionsmedium wieder aus dem Adsorbens 4 desorbiert und zu

dem im Plattenwärmetauscher 1 enthaltenen Adsorbens 3 zurückgeführt werden soll. Der Kompressor 9' wird dann stillgesetzt und gleichzeitig das Ventil 6 geöffnet, wodurch der Druck im Plattenwärmetauscher 2 so weit fällt, daß das im Adsorbens 4 gebundene Sorptionsmedium desorbiert und in den Plattenwärmetauscher 1 zurückströmt. Die hierfür erforderliche Wärmeenergie wird aus der auf niedrigem Temperaturniveau befindlichen äußeren Wärmequelle zugeführt, indem die Dreiwegeventile 13, 14 entsprechend umgeschaltet werden. Das Nutzwärmesystem wird hierbei vom Behälter 2' abgeschaltet und - durch Umschaltung der Dreiwegeventile 7, 8 - auf den Behälter 1' umgelegt. Die bei der Adsorption des in den Plattenwärmetauscher 1 zurückgeführten Sorptionsmediums im Adsorbens 3 wiederum frei werdende Bindungs- und Kondensationswärme wird somit an das Nutzwärmesystem abgeführt.

Es ist ersichtlich, daß das vorstehend betriebene Wärmepumpensystem auch noch dahingehend abgewandelt werden kann, daß eine Absaugung und Verdichtung des gasförmigen Sorptionsmediums nicht nur im ersten Arbeitsschritt, d.h. beim Übertritt vom Plattenwärmetauscher 1 zum Plattenwärmetauscher 2, sondern auch beim anschließenden zweiten Arbeitszyklus verwirklicht werden kann, wenn das Sorptionsmedium wieder vom Plattenwärmetauscher 2 zum Plattenwärmetauscher 1 zurückgefördert wird. Hierzu müßte dann entweder der Kompressor 9' in seiner Förderrichtung umkehrbar ausgebildet werden, oder an die Stele des Ventils 6 könnte ein zweiter Kompressor in die Beipaß-Leitung 5' eingeschaltet werden, dessen Förderrichtung der Förderrichtung des Kompressors 9' entgegengesetzt ist. Dann ist es auch möglich - und zweckmäßig - in beiden Plattenwärmetauschern Adsorbentien mit gleichen De- und Adsorptionseigenschaften zu verwenden.

## Patentansprüche

1. Verfahren zur Gewinnung von Nutzwärme, z.B. für die Heizung von Gebäuden, Brauchwassererwärmung o.dgl. nach dem Arbeitsprinzip der Wärmepumpe aus einer äußeren, auf einem niedrigeren Temperaturniveau befindlichen Wärmequelle, z.B. Umweltwärme, Abwärme von Fabrikationsprozessen o.dgl., bei dem in einem druckdicht abgeschlossenen System mit einem festen ersten Gasadsorbens und einem zweiten festen Gasadsorbens durch Zufuhr von Fremdenergie ein gasförmiges Sorptionsmedium (Adsorbat) aus dem ersten Gasadsorbens desorbiert und an dem zweiten Gasadsorbens solange unter Wärmeabfuhr an ein Nutzwärmesystem adsorbiert wird, bis ein quasi-stationärer Gleichgewichtszustand erreicht ist, wobei der Druck des Sorptionsmediums im Bereich des ersten Gasadsorbens gesenkt und das Adsorptionsbestreben dieses ersten Gasadsorbens für das Soprtionsmedium dadurch soweit erhöht wird, daß das in dem zweiten Gasadsorbens adsorbierte gasförmige Sorptionsmedium unter Aufnahme von Wärmeenergie aus der auf niedrigerem Temperaturniveau befindlichen Wärmeenergiequelle dann wieder desorbiert, dem ersten Gasadsorbens zugeführt und dort adsorbiert wird, und bei dem der vorstehende Zyklus dann ständig wiederholt wird,
d a d u r c h g e k e n n z e i c h n e t ,
daß die Fremdenergie dem ersten Gasadsorbens in Form von gesondert erzeugter Fremdwärme relativ hohen Temperaturniveaus zugeführt, der infolge der Zufuhr von Fremdenergie im ersten Gasadsorbens gespeicherte Wärmeinhalt nach Erreichen des quasi-stationären Gleichgewichtszustandes auf das Wärmenutzsystem übertragen und das erste Gasadsorbens auf diese Weise unter Erhöhung seines Adsorptionsbestrebens für das Sorptionsmedium abgekühlt und das aus dem ersten Gasadsorbens desorbierte Sorptionsmedium dem in seinen De- und Adsorptionseigenschaften unterschiedlichen zweiten Gasadsorbens zugeführt wird.

2. Verfahren zur Gewinnung von Nutzwärme, z.B. für die Heizung von Gebäuden, Brauchwassererwärmung o.dgl. nach dem Arbeitsprinzip der Wärmepumpe aus einer äußeren, auf einem niedrigeren Temperaturniveau befindlichen Wärmequelle, z.B. Umweltwärme, Abwärme von Fabrikationsprozessen o.dgl., bei dem in einem druckdicht abgeschlossenen System mit einem festen ersten Gasadsorbens und einem zweiten festen Gasadsorbens durch Zufuhr von Fremdenergie ein gasförmiges Sorptionsmedium (Adsorbat) aus dem ersten Gasadsorbens desorbiert und an dem zweiten Gasadsorbens solange unter Wärmeabfuhr an ein Nutzwärmesystem adsorbiert wird, bis ein quasi-stationärer Gleichgewichtszustand erreicht ist, wobei der Druck des Sorptionsmediums im Bereich des ersten Gasadsorbens gesenkt und das Adsorptionsbestreben dieses ersten Gasadsorbens für das Soprtionsmedium dadurch soweit erhöht wird, daß das in dem zweiten Gasadsorbens adsorbierte gasförmige Sorptionsmedium unter Aufnahme von Wärmeenergie aus der auf niedrigerem Temperaturniveau befindlichen Wärmeenergiequelle dann wieder desorbiert, dem ersten Gasadsorbens zugeführt und dort adsorbiert wird, und bei dem der vorstehende Zyklus dann ständig wiederholt wird, d a d u r c h g e k e n n z e i c h n e t , daß als feste Gasadsorbentien Kieselsäureheteropolykondensate verwendet werden, die dadurch hergestellt sind, daß man

a) mindestens ein hydrolysierbares Kieselsäurederivat der allgemeinen Formel I

$$SiR_4 \qquad (I)$$

in der R Wasserstoff, Halogen, Alkoxy oder $-NR'_2$ (R' = Wasserstoff und/oder nieder-Alkyl) bedeutet, jedoch nicht alle Reste R Wasserstoff sind, und

b) mindestens ein substituiertes Silan der allgemeinen Formel II

$$SiR_nR'_{(4-n)} \qquad (II)$$

in der R die vorstehende Bedeutung hat, R' Alkyl, Alkenyl, Aryl oder Aralkyl darstellt und n eine ganze Zahl von 1 bis 3 ist, sowie

c) mindestens ein funktionelles Silan der allgemeinen Formel III

$$SiR_n(R''Y)_{(4-n)} \qquad (III)$$

in der R die vorstehende Bedeutung hat, R" Alkylen, Phenylen, Alkylphenylen oder Alkylenphenylen darstellt, Y Halogen oder eine gegebenenfalls substituierte Amino-, gegebenenfalls substituierte Anilino-, Aldehyd-, Keto-, Carboxy-, Hydroxy-, Mercapto-, Cyano-, Hydroxyphenyl-, Diazo-, Carbonsäurealkylester-, Sulfonsäure -($-SO_3H$) oder Phosphorsäuregruppe ($-PO_3H_2$) bedeutet und n eine ganze Zahl von 1 bis 3 ist,

in Gegenwart mindestens der zur Hydrolyse stöchiometrisch erforderlichen Wassermenge sowie gegebenenfalls in Gegenwart eines Kondensationskatalysators und/oder eines Lösungsmittels kondensiert, wobei die Menge der Komponenten a) bis c) so gewählt wird, daß das entstehende Kieselsäureheteropolykondensat, bezogen auf Oxide, 35 bis 90 Gew.-% der Komponente (a), 10 bis 50 Gew.-% der Komponente (b), 0 bis 15 Gew.-% der Komponente (c) enthält.

3. Verfahren nach Anspruch 2, dadurch gekennzeichnet, daß die Fremdenergie dem ersten Gasadsorbens in Form von gesondert erzeugter Fremdwärme relativ hohen Temperaturniveaus zugeführt, der infolge der Zufuhr von Fremdenergie im ersten Gasadsorbens gespeicherte Wärmeinhalt nach Erreichen des quasi-

-stationären Gleichgewichtszustandes auf das Wärmenutzsystem übertragen und das erste Gasadsorbens auf diese Weise unter Erhöhung seines Adsorptionsbestrebens für das Sorptionsmedium abgekühlt und das aus dem ersten Gasadsorbens desorbierte Sorptionsmedium dem in seinen De- und Adsorptionseigenschaften unterschiedlichen zweiten Gasadsorbens zugeführt wird.

4. Verfahren nach Anspruch 2, dadurch gekennzeichnet, daß die Fremdenergie dem ersten Gasadsorbens in Form von Wärme aus der auf niedrigerem Temperaturniveau befindlichen Wärmequelle zugeführt wird, wobei dem aus dem ersten Gasadsorbens desorbierten Desorptionsmedium beim Übertritt zum zweiten Gasadsorbens durch Verdichtung zusätzliche äußere Energie zugeführt wird.

5. Verfahren nach einem der Ansprüche 1 bis 4, dadurch gekennzeichnet, daß als Gasadsorbentien einerseits ein Gasadsorbens mit den Merkmalen a) bis c) (nach Anspruch 2) und andererseits ein mit MnO imprägniertes Gasadsorbens mit den Merkmalen a) bis c) (nach Anspruch 2) verwendet werden.

6. Verfahren nach einem der Ansprüche 1, 2 oder 4, dadurch gekennzeichnet, daß als Gasadsorbentien $SiO_2$ einerseits und eine Mischung aus 30 Gew.-% $SiO_2$ und 70 Gew.-% $(NH_2(CH_2)_3Si)_2O_3$ andererseits verwendet werden.

7. Verfahren nach einem der Ansprüche 1, 2 oder 4, dadurch gekennzeichnet, daß als Gasadsorbentien $SiO_2$ einerseits und eine Mischung aus 60 Gew.-% $SiO_2$ und 40 Gew.-% $(CH_3)_2Si_2O_3$ andererseits verwendet werden.

8. Verfahren nach einem der Ansprüche 1, 2 oder 4, dadurch gekennzeichnet, daß als Gasadsorbentien mit MnO imprägniertes $SiO_2$ einerseits und eine Mischung aus 60 Gew.-% $SiO_2$ und

40 Gew.-% $(CH_3)_2Si_2O_3$ andererseits verwendet werden.

9. Verfahren nach einem der Ansprüche 1 bis 8, dadurch gekennzeichnet, daß als feste Gasadsorbentien solche verwendet werden, die durch entsprechende Behandlung in ihrem Adsorptionsverhalten zum gasförmigen Sorptionsmedium durch Bildung aktiver Adsorptionszentren und/oder Gefügeparameter, wie eine hohe spezifische Oberfläche und/oder eine auf das Sorptionsmedium abgestimmte Porenradienverteilung, beeinflußt sind.

10. Verfahren nach einem der Ansprüche 1 bis 9, dadurch gekennzeichnet, daß als gasförmiges Sorptionsmedium $CO_2$ verwendet wird.

11. Wärmepumpe, bei der aus zwei durch wenigstens eine Leitung (5) verbundenen Behältern (1; 2) ein druckdicht abgeschlossenes inneres Sorptionssystem gebildet ist, in welchem ein gasförmiges Sorptionsmedium (Adsorbat) eingeschlossen ist, die Behälter (1; 2) mit festen Gasadsorbentien (3; 4) mit unterschiedlichen De- und Adsorptionseigenschaften gefüllt sind, die Behälter (1; 2) jeweils als Teil einer Wärmeaustauschereinrichtung für Wärmeübertragung von zugeführter äußerer Wärmeenergie auf die Gasadsorbentien (3; 4) und Abfuhr von Wärmeenergie aus den Gasadsorbentien (3; 4) ausgebildet sind, an die Wärmeaustauschereinrichtung der Behälter (1; 2) ein von einem Nutzwärme-Trägermedium durchströmbares Leitungssystem (10, 11) angeschlossen ist und Steuerorgane (13; 14) zur abwechselnden Beaufschlagung der Wärmeaustauschereinrichtung des zweiten Behälters (2) mit Wärmeenergie aus der auf niedrigem Temperaturniveau befindlichen äußeren Wärmequelle (15) bzw. dem Nutzwärme-Trägermedium vorgesehen sind, zur Durchführung des Verfahrens nach Anspruchs 1,

d a d u r c h g e k e n n z e i c h n e t ,

daß dem zweiten Behälter (2) die äußere Wärmequelle (15) niedrigen Temperaturniveaus und dem ersten Behälter (1) eine Fremdwärmequelle (9) hohen Temperaturniveaus zugeordnet ist, mittels welcher das im Behälter enthaltene Gasadsorbens in einen Temperaturbereich erwärmbar ist, in welchem das Sorptionsmedium desorbiert, und daß Steuerorgane (7; 8) zur abwechselnden Beaufschlagung der Wärmeaustauschereinrichtung des ersten Behälters (1) mit Wärmeenergie aus der Fremdwärmequelle (9) bzw. dem Nutzwärme-Trägermedium vorgesehen sind.

12. Wärmepumpe, bei der aus zwei durch wenigstens eine Leitung (5) mit einem in dieser Leitung eingeschalteten, durch äußere Energie getriebenen Kompressor (9') verbundenen inneren Behälter (1; 2) ein druckdicht abgeschlossenes Sorptionssystem gebildet ist, in welchem ein gasförmiges Sorptionsmedium (Adsorbat) eingeschlossen ist, die Behälter (1; 2) mit festen Gasadsorbentien (3; 4) gefüllt sind, die Behälter (1; 2) jeweils ein Teil einer Wärmeaustauschereinrichtung für Wärmeübertragung von zugeführter äußerer Wärmeenergie auf die Adsorbentien (3; 4) und Abfuhr von Wärmeenergie aus den Gasadsorbentien gebildet sind, wobei jeweils einer der Behälter über die ihm jeweils zugeordnete Wärmeaustauschereinrichtung an die äußere Wärmequelle (15) niedrigeren Temperaturniveaus und der jeweils andere Behälter über die ihm zugeordnete Wärmeaustauschereinrichtung an ein von einem Nutzwärme-Trägermedium durchströmtes Leitungssystem (10, 11) angeschlossen ist und Steuerorgane (7; 8; 13; 14) zur abwechselnden Beaufschlagung der Wärmeaustauschereinrichtung der beiden Behälter (1; 2) mit Wärmeenergie aus der auf niedrigem Temperaturniveau befindlichen äußeren Wärmequelle (15) bzw. dem Nutzwärme-Trägermedium versehen sind, zur Durchführung des Verfahrens nach Anspruch 2,

d a d u r c h   g e k e n n z e i c h n e t ,

daß in eine vor und hinter dem Kompressor (9') an der die Behälter (1; 2) verbindenden Leitung (5) angeschlossene Beipass-Leitung (5') ein Ventil (6) eingeschaltet ist, durch welches die Beipass-Leitung (5') wahlweise geschlossen oder geöffnet werden kann.

0202662

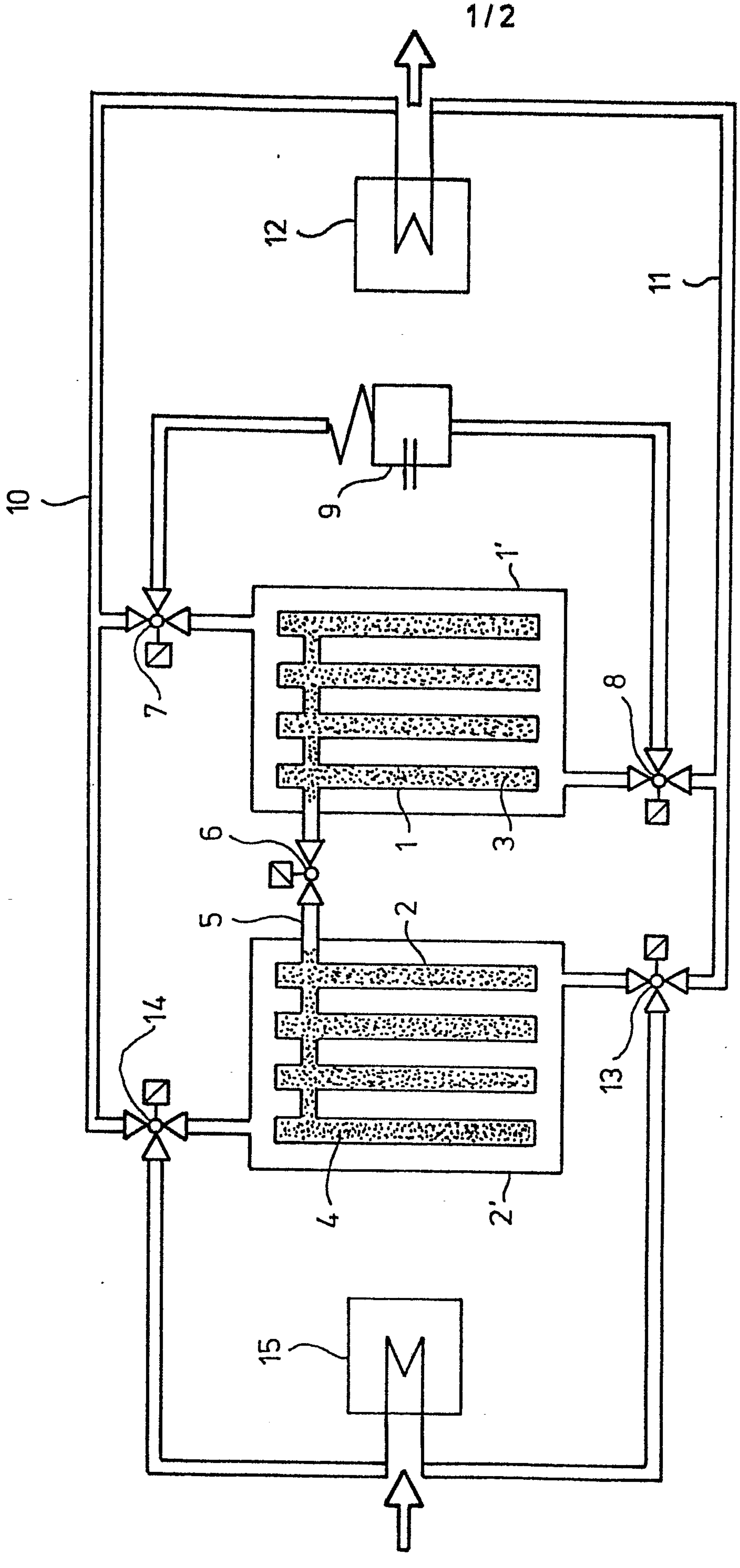


Fig. 1

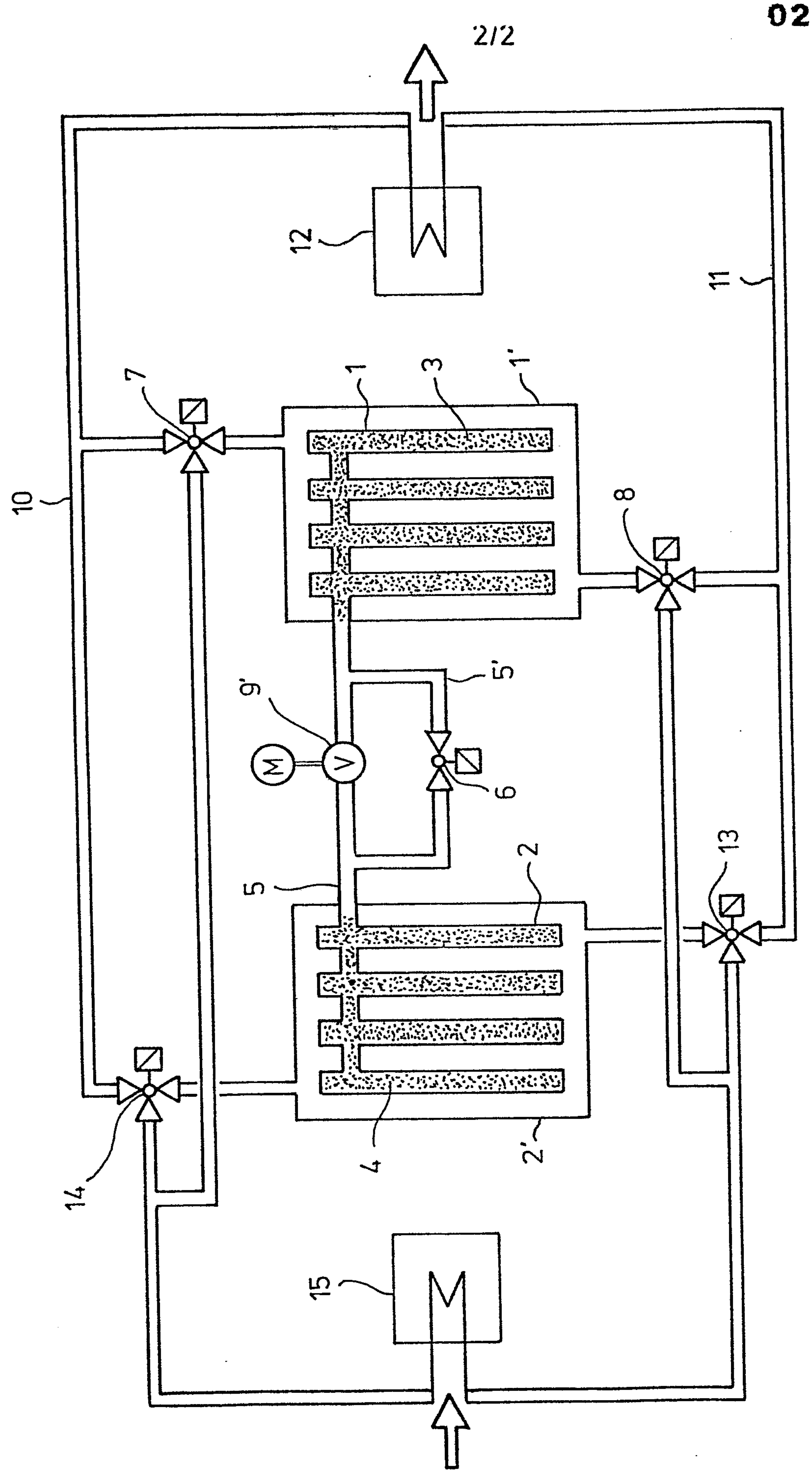


Fig. 2

Europäisches Patentamt

0202662

Nummer der Anmeldung

# EUROPÄISCHER RECHERCHENBERICHT

EP 86 10 6867

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | PATENTS ABSTRACTS OF JAPAN, Band 9, Nr. 94 (M-374)[1817], 24. April 1985; & JP - A - 59 219 648 (MATSUSHITA DENKI SANGYO K.K.) 11-12-1984<br>* Ingesamt *<br>--- | 1 | F 25 B 17/08<br>F 25 B 29/00<br>F 24 J 3/00 |
| X | FR-A-2 526 926 (INSTITUT FRANCAIS DU PETROL)<br>* Insgesamt *<br>--- | 1,10, 11 | |
| X | EP-A-0 055 855 (SEKISUI KAGAKU KOGYO K.K.)<br>* Seite 19, Zeile 1 - Seite 20, Zeile 6; Figur 10 * | 1,11, 12 | |
| Y | | 2,3,4, 9 | RECHERCHIERTE SACHGEBIETE (Int. Cl.4) |
| | --- | | F 25 B<br>F 24 J<br>C 09 K |
| D,Y | DE-A-2 758 415 (SCHMIDT et al.)<br>* Insgesamt *<br>--- | 2-4 | |
| Y | GB-A-2 103 509 (EXXON)<br>* Insgesamt * | 9 | |
| A | | 5 | |
| | --- | | |
| A | DE-A-3 312 875 (DEGUSSA AG)<br>* Insgesamt *<br>--- -/- | 5-9 | |

Der vorliegende Recherchenbericht wurde für alle Patentansprüche erstellt.

| Recherchenort | Abschlußdatum der Recherche | Prüfer |
|---|---|---|
| DEN HAAG | 13-08-1986 | SILVIS H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

0202662

Europäisches Patentamt

# EUROPÄISCHER RECHERCHENBERICHT

Nummer der Anmeldung

EP 86 10 6867

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 039 023 (McCLAINE)<br>--- | | |
| A | EP-A-0 124 455 (C.N.R.S.)<br>--- | | |
| A | WO-A-8 100 904 (CETIAT)<br>--- | | |
| A | US-A-4 187 688 (BERG)<br>----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 13-08-1986 | SILVIS H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument